# EUROPEAN PATENT APPLICATION

(11) **EP 2 960 871 A1**
(43) Date of publication of application: **30.12.2015**
(21) Application number: 15173265.8
(22) Date of filing: 23.06.2015
(51) Int. Cl.: G07C 9/00, G07F 17/12

(54) **DELIVERY AND COLLECTION APPARATUS, METHOD AND SYSTEM**

(30) Priority: 23.06.2014 GB 201411141
(71) Applicant: Parcelhome Limited, 7 Dublin (IE)
(72) Inventor: MACKIN, Gregory, LONDRES, FR NW16HU (GB); HUTEN, Jean-Michel, 50610 JULLOUVILLE (FR); CHABRERIE, Christian, 75013 PARIS (FR)
(74) Representative: Cabinet Plasseraud

(57) **Abstract**

A storage container for storing postal items, the container comprising: a container with a door, a locking means for locking the door shut, code input means for inputting a code to unlock the locking means, weighing means for measuring the weight of contents of the container, and communication means for communicating the measured weight of the contents when the door is locked shut, wherein a code for unlocking the locking means varies over time.

## Description

### Background

### Technical field

The present invention relates to the field of the delivery and collection of packages. In particular, the invention relates to containers for installation at, for example, the home or a business premises, the containers being capable of receiving packages for delivery and also for collection. The invention also relates to methods and systems for enabling secure delivery/collection of packages in the absence of the owner of the container, and to methods for establishing the weight of packages in the container to act as a confirmation of delivery/collection and as a means of establishing pricing.

### Related art

Receiving goods via home or small office delivery is becoming increasingly common with the advent of online shopping. However, such deliveries are typically made during normal working hours, therefore if the recipient if not normally at home during such times, a problem exists in that there will be no one available to receive the goods. Moreover if goods need to be collected, for example to return them to a vendor, then a similar problem exists in the absence of the sender.

Typically, in such circumstances a delivery person will usually opt to deliver the goods to a neighbour, leave the goods in an unsecured location or simply not deliver. None of these solutions is ideal from the point of view of either the deliverer or the recipient. If the goods are delivered to a neighbour the recipient must then find the neighbour whilst they are in, in order to actually receive the goods. If the goods are left in an unsecured location, then there exists the possibility that the goods will be stolen or damaged before the recipient retrieves them. If the goods are not delivered then typically, the recipient will have to arrange to collect the goods at a suitable time. Throughout this application, the term goods and package are used interchangeably, and are intended to cover an item that is left as a delivery or for later collection.

Solutions to this problem exist in the form of secure delivery boxes (containers) that are located, for example, at railway stations. The delivery person can then leave the goods in a secure box, and the recipient can be supplied with a code or key to open the box. This lacks the convenience of delivery to the recipient's home, and if the goods are heavy or bulky it may be difficult to then transport them back home.

Secure delivery boxes for the home also exist, and typically take two general forms. Either the box has some form of delivery chute to allow a delivery person to deposit goods in the box but not to remove goods from the box, or alternatively the box contains some form of electronic lock to allow a delivery person to open the box using a code and deposit the goods.

Boxes with delivery chutes typically must be very large to allow large packages to be delivered since typically the chute must be of comparable size to the box. In addition, if the box is already full then delivery of a further package will not be possible. Further no delivery tracking is usually possible. Moreover, such boxes cannot be used to store packages for collection since the person collecting the package has no access to the box.

Boxes with electronic locks have the problem that access codes must be changed periodically to prevent undesired access to the box. Without a connection to a computer network, the changing of the codes must be done whilst the user is at home, and also knowledge of the status of the box (e.g. full or empty) or of the access history (who opened the box and at what time) will not generally be known. Typically, it is costly and difficult to provide such a connection to a delivery box, and in addition such a connection will usually also require the provision of an external source of power. Moreover, both types of box do not permit a "signed for" delivery or collection, and so a delivery that requires such a signature cannot be made. Further, similar problems arise if the user of the box wishes to have a package collected from the box in his/her absence, for example by a package delivery company. Moreover, since the cost of shipping a package is typically determined in part by the weight of the package, it is difficult to establish a suitable price for the collection prior to collection by the package delivery company.

It is an aim of the present invention to solve or mitigate at least some of the above-described problems.

### Summary

In a first aspect, there is provided a storage container for storing postal items, the container comprising: a container with a door, a locking means for locking the door shut, code input means for inputting a code to unlock the locking means, weighing means for measuring the weight of contents of the container, and communication means for communicating the measured weight of the contents when the door is locked shut, wherein a code for unlocking the locking means varies over time.

Thus, the storage device can be configured to measure the weight of the contents of the container in a manner that provides protection against future tampering of the contents, since the access code will change over the passage of time. Moreover, since the code will change automatically over time, no external connections, such a wired connection to from a communication system to the storage device need be provided.

In some embodiments, the communication means comprises wireless means to communicate with a user device. Thus, advantageously, the measurement of the weight of the contents can be communicated to the outside world via the user device.

In some embodiments, the storage container further comprises a code generation means for generating a plurality of access codes in a first series, each access code being valid for a predetermined period of time, and a code comparison means, wherein the code comparison means is configured to unlock the lock in response to input of a code that corresponds to a currently valid access code. Thus, advantageously, with knowledge of the means for generating the access codes, and external code provider can provide valid access codes without needing to communicate directly with the storage container.

In some embodiments, the code generation means is configured to generate a plurality of access codes in a first series and a second series, each access code being valid for a predetermined period of time, and wherein the period of validity of each access code in first series partially overlaps the period of validity two adjacent access codes in the second series. Thus, advantageously, the storage container can accept a plurality of input codes at any given time as valid codes, and thereby allowance can be made of any errors in the timing used to calculate the input codes.

In some embodiments, the storage container is configured to determine the weight of the contents of the container by determining a difference between weight measurements taken upon receipt of an access code, but before the door is opened, and subsequently after the door is locked shut. Thus, advantageously, a comparison of the weights before opening the door and after shutting it can be made to ensure that tampering of the contents does not occur after the measurement of the weight.

In a second aspect, there is provided a method for processing a request for collection of a package from a storage container, the container comprising an internal means for weighing a package, means to communicate with a user device and being unlockable using a time-varying access code, the method comprising: receiving a request for collection of a package, providing a currently valid access code for accessing the storage container, receiving information regarding the weight of the contents of the container, and generating collection information on the basis of the weight of the contents, wherein the information regarding the weight of the contents of the container is communicated to a user device via the means to communicate with a user device when the container is locked shut. Thus, advantageously, a collection of a package can be arranged taking into account the weight of the package, such weighing being performed by the box.

In some embodiments, the information regarding the weight of the contents of the container is derived by comparing one or more measurements of the weight of the contents of the container upon input of the access code but before a door to the container is opened, with one or more measurements taken after the door is locked shut. Thus, advantageously, a comparison of the weights before opening the door and after shutting it can be made to ensure that tampering of the contents does not occur after the measurement of the weight.

In some embodiments package identification means is also provided in the form of a code for identifying the package to be collected. Thus, advantageously, the package identification means can be attached to the package to ensure that the package is identifiable upon and after collection.

In some embodiments, the package identification means is provided to a user of the storage container prior to receipt of the request for collection of the package and associated with the package upon receipt of the request for collection of the package. Thus, advantageously, the package identification means need not be created at the time of requesting collection to thereby reduce the time take to make the collection request.

In some embodiments, the collection information includes pricing information regarding a plurality of pricing options for collection of the package. Thus, advantageously, the collection pricing can be made on the basis of the actual measured weight of the package.

In a third aspect there is provided a method for providing an access code for delivery of a package to a storage container, the container comprising an internal means for weighing a package, means to communicate with a user device and being unlockable using a time-varying access code, the method comprising: receiving a request for an access code for delivery of a package, providing a currently valid access code for accessing the storage container, receiving information regarding the weight of the contents of the container, and generating delivery information on the basis of the weight of the contents, wherein the information regarding the weight of the contents of the container is communicated to a user device via the means to communicate with a user device when the container is locked shut. Thus, advantageously, it can be ensured that delivery of a package has been made by examination of the weight information.

In some embodiments, the information regarding the weight of the contents of the container is derived by comparing a measurement of the weight of the contents of the container upon input of the access code but before a door to the container is opened, with a measurement taken after the door is locked shut. Thus, advantageously, a comparison of the weights before opening the door and after shutting it can be made to ensure that tampering of the contents does not occur after the measurement of the weight.

In some embodiments a delivery confirmation message or error message on the basis of the information regarding the weight of the contents of the container is also provided. Thus, advantageously, confirmation of the delivery can be ensured on the basis of the weight of the contents.

In further aspects there is provided a computer program product comprising computer readable instructions which, when implemented on a processor perform all of the steps of the method of any of the second or third aspects, and a computer readable medium comprising such a computer program.

### Brief description of the drawings

The invention will now be described with reference to the accompanying Figures of which:
Figure 1 illustrates a box for receiving deliveries in accordance with an embodiment of the invention;
Figure 2 illustrates further details of the box of Figure 1;
Figure 3 illustrates details of a lock for the box of Figures 1 and 2;
Figure 4 illustrates further details of the lock of Figure 3;
Figure 5 illustrates details of making a request to open a lock of a box according to embodiments of the invention;
Figure 6 illustrates steps in a method of opening a lock of a box according to embodiments;
Figure 7 illustrates details of a server according to embodiments;
Figure 8 illustrates steps in a method of processing access requests at a server according to embodiments;
Figure 9 illustrates details of a method of synchronisation of electronic timers according to embodiments;
Figure 10 illustrates further details of the method of Figure 9;
Figure 11 illustrates details of a method of providing access to the box for delivery of a package according to embodiments;
Figure 12 illustrates steps in a method of requesting a collection of a package deposited in the box according to embodiments; and
Figure 13 illustrates a package identifier for use with the method of Figure 12.

### Detailed Description

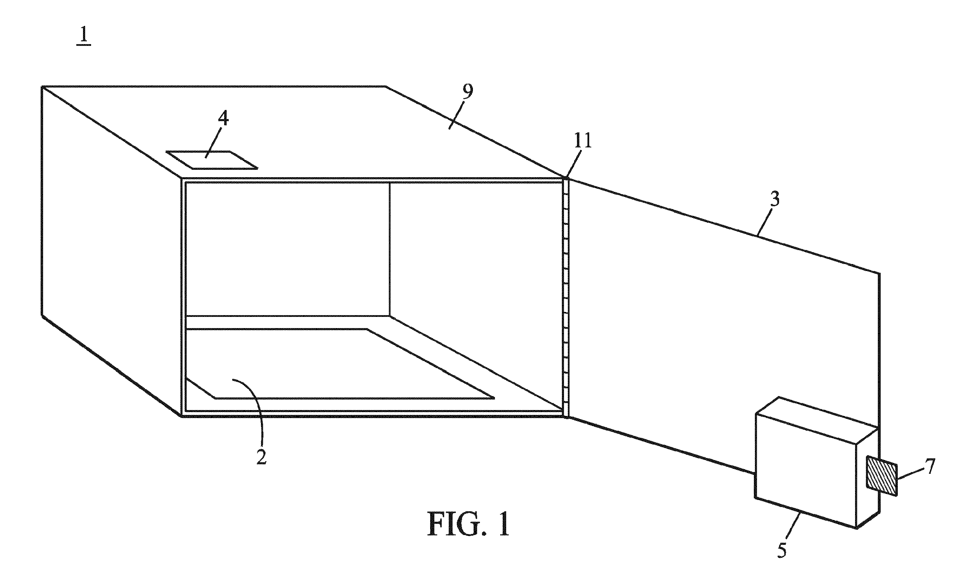

Figure 1 illustrates an example of a delivery/storage box 1 according to an embodiment of the present invention.

The box 1 of Figure 1 comprises a container 9 that is in the form of a rectangular box with one side that is operable to be opened by means of a door panel 3. The door panel 3 is hinged 11 along one edge to allow the door panel 3 to open and close. The box 1 can, for example, be fixed to the wall of a house via fixing means internal to the box 1, so as to form a secure box for home delivery of packages that cannot be moved from a fixed location without having access to the inside of the box 1. A lock 5 is provided on the door panel 3, the lock 5 has a locking means 7 which, when in its locked state, is configured to prevent the door panel 3 from being opened. The lock 5 also comprises means 16 (not illustrated) to determine whether the door panel 3 is open and whether the lock 5 is locked. Thus, a package can be placed inside the box 1 and, when the door panel 3 is locked shut, access to the package is restricted. The box 1 further comprises a weighing means 2, in the form of an electronic balance located on the internal lower surface of the box 1. The weighing means 2 is configured to occupy a large fraction of the internal lower surface of the box 1, so that it can thereby weigh any item that is placed inside the box 1.

The box 1 also comprises a communication means 4, which is configured to communicated data to the outside of the box 1. In the presently described embodiment and by way of example, the communication means 4 is in the form of a near-field communication (NFC) device. However, the skilled person will recognise that the communication means 4 could equally operate via other radio technology, such as Bluetooth, WiFi (IEEE 802.11) or mobile telephony technology. Further the communication means 4 could operate via optical means, such as via a display mounted on the outside of the box 1 which can be read either directly by a user or by a camera on a user device. Further the communication means could alternatively be an acoustic communication means.

The skilled person will recognise that the box 1 can be of essentially any size and shape, and that configurations other than that illustrated can equally be employed. Thus, for example, the lock 5 can be located in places other than on the door panel 3 of the box 1, such as on a side wall of the box 1. Moreover, the locking means 7 can be provided in a manner that is physically separate from the rest of the lock 5. The skilled person will also understand how to implement a locking means 7 in such a box and so further details will not be explained here.

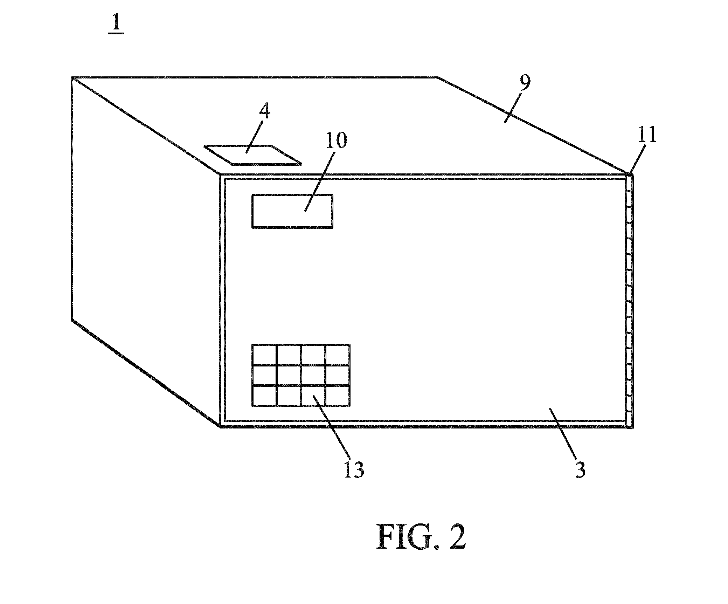

Figure 2 illustrates the box 1 of Figure 1 when the door panel 3 is in its closed state. As illustrated in Figure 2, on the outside of the door panel 3 is a keypad 13. The keypad 13 is configured to allow input of a code wherein input of a suitable access code will cause the lock 5 to open and allow access to the box 1. The skilled person will recognise that the keypad can be located at other points on the outside of the box 1, or indeed in a separate location to that of the box 1.

In alternative embodiments no keypad is provided and input of an access code can be effected by means of wireless communications such as NFC, Bluetooth, IEEE 802.11, infrared or other optical means or the like. In further alternative embodiments both a physical keypad 13 and access via wireless means are configured to be possible on the box 1. The skilled person will also recognise that the communication means 4 can also be used to effect input of the access code.

Also shown in Figure 2 is a box identifier 10. The box identifier 10 comprises information that provides a unique identifier for the box 1. In the presently described embodiment, the box identifier 10 comprises a code on the outside of the box, such as an alphanumeric code, barcode, data matrix or the like. As illustrated in Figure 2, the box identifier 10 is visible on the outside of the box 1.

However, in alternative embodiments, the box identifier 10 can be invisible from the outside of the box 1, and instead take the form of information merely associated with the box, for example stored in a memory inside the box 1. In such embodiments, the information comprising the box identifier 10 can, optionally, be made accessible externally to the box 1 via the communication means 4.

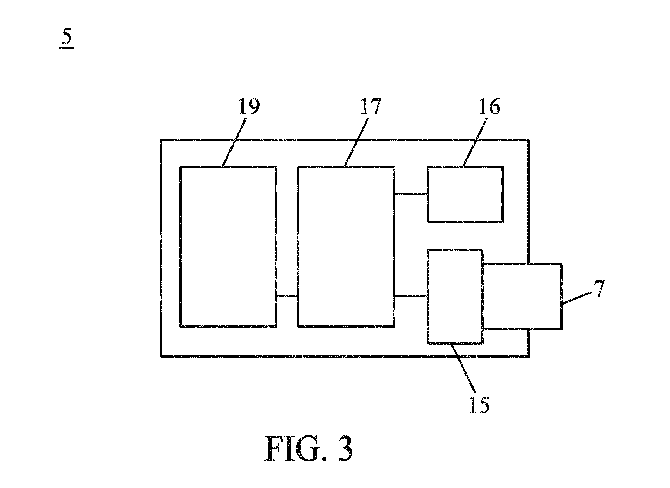

Figure 3 illustrates further details of the lock 5 according to an embodiment of the invention. The lock 5 comprises a locking means 7 in the form of a bolt, and an actuation means 15. The actuation means 15 is configured to mechanically operate the locking means 7 to lock or unlock the locking means 7 in response to an electronic signal. The electronic signal is provided by a controller 17, further details of which will be described below. The lock 5 also has a power source 19, in this example embodiment, the power source 19 is a battery. However, in alternative embodiments the power source 19 can comprise other sources of electrical power such as a connection to mains power, a capacitor, a fuel cell, a photovoltaic cell or a combination of such sources, such as mains power with a battery back up. However, the skilled person will recognise that the box 1 as described in the present embodiment is configured with electrical devices that have a relatively low power consumption. Thus, advantageously, the box 1 could be entirely powered using an integral battery and/or solar panel. Thus, the box 1 is capable of functioning without any external wired connections, and such a configuration has advantages in the ease of installation and for maintenance.

The lock 5 further comprises sensing means 16 that is connected to the controller 17. The sensing means 16 senses whether the door panel 3 is shut and whether the locking means 7 is engaged i.e. whether the lock is locked. In the presently described embodiment, the sensing means 16 comprises a magnetic sensor that is located in, or close to, the locking means 7. A magnet (not illustrated) is located on the box 1, and in a position such that it will be close to the locking means 7 when the door panel 3 is shut and the locking means 7 is engaged. Thus, if the sensing means 16 senses the presence of a magnetic field, it can be inferred that the door panel 3 is shut and that the locking means 7 is engaged, in other words that the door panel 3 is locked shut.

The skilled person will recognise that other sensing means 16 can equally be used, such as optical sensors or electrical contact sensors for the purpose of sensing the status of the door pane 3/lock 5. Moreover, the sensing means 16 need not be located at the lock 5, and could instead be located on the box 1 at the striking position of the locking means 7 or at the hinge 11. In addition, if the locking means 7 employs a latch-type mechanism whereby shutting the door panel 3 automatically engages the locking means 7, then the sensing means 16 need only determine whether the door panel 3 is closed in order to infer that it is locked shut.

In operation, the controller 17 and actuator means 15 are powered by the power source 19. To open the lock 5, a valid access code must be input, either via the keypad 13 or other code input means as described above. Upon receipt of a valid access code, the controller 17 will send an electronic signal to the actuator means 15 to open the locking means 7. The skilled person will recognise that the process of locking the lock 5 after opening can, for example, be implemented either automatically, for example at a predetermined interval after unlocking, by entering a locking code, or by mechanical actuation means.

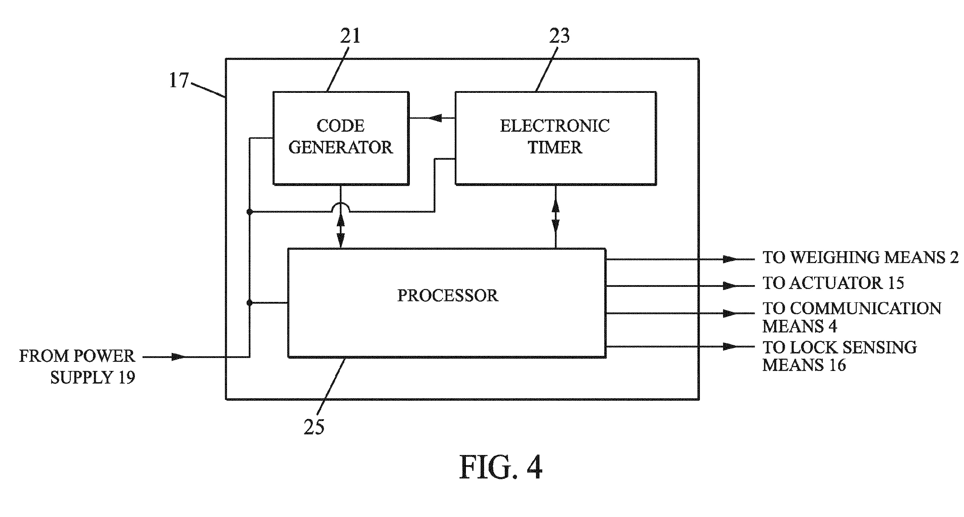

Figure 4 illustrates further details of the controller 17. The controller 17 comprises a code generator 21, an electronic timer 23 and a processor 25 including a memory. The code generator 21 generates access codes that are valid for unlocking the box 1 in the manner described above. To generate access codes, the code generator 21 applies an algorithm that has inputs including a current time value, as provided by the electronic timer 23 and a seed code related to the box identifier 10. The seed code is stored in a memory device associated with the code generator 21. The algorithm used to generate the access codes can, for example, employ a hash function and/or RSA encryption to the combination of the inputs. In the case of RSA encryption, a system of public and private keys will be employed for transmission of the access codes. The skilled person will recognise how to implement such a system and so further details will not be provided here.

In alternative embodiments, the access codes can be pre-generated by a code generator 21 that is external to the box 1, and simply stored in the memory device of the box 1. In such embodiments, the electronic timer 23 is configured to select access codes from the memory on the basis of the current time. Thus, in such embodiments, the code generator 21 can be eliminated from the controller 17. The collection of access codes can be installed in the box 1, for example during manufacture of the box or at the time of installation, by, for example, installing a memory in the box 1 that has the access codes pre-loaded. Alternatively, the access codes can be loaded into the memory of the box 1 by other known means, such as via USB or other data transfer protocol.

Since the algorithm as described above is used to generate the access code, the resulting access code cannot easily be replicated by means external to the box 1 without knowledge of the time, the seed code and the actual algorithm employed. In the presently described embodiment, whilst the seed code is related to the box identifier 10, it is kept secret and will typically be known only to a service provider providing services related to the box 1. Typically, each box 1 will have a unique seed code. In the presently described embodiment, the access codes each comprise a six digit number. However, the skilled person will recognise that access codes having a higher or lower number of digits can equally be used. In addition, access codes comprising characters other than numbers can also be employed. Thus access codes can comprise any character/number/symbol so long as such a symbol can be input via a code input means.

The code generator 21 is configured to generate a new access code at periodic intervals. In the presently described embodiment, the interval is two minutes, although the skilled person will recognise that other intervals could equally be used. Thus, every two minutes, the electronic timer 23 sends a new current time value to the code generator 21, and this triggers the code generator 21 to apply the code generation algorithm again, taking its inputs as the seed code and the new current time value.

Upon generation of a new access code, the previously generated access code becomes invalid. Thus, effectively, the access code required to open the lock 5 changes every two minutes. Accordingly, to access the box 1, a user must have knowledge of the currently valid access code.

The processor 25 is configured to receive and store the currently valid access code from the code generator 21 and also to receive input codes input by a user. As noted above, these input codes are either input via a keypad 13 or via the other possible input means described. The processor 25 then compares an input code with the currently valid access code. If these codes match, then the processor 25 sends an appropriate signal to the actuator 15 to open the lock 7.

If the comparison of the input code and the currently valid access code reveals that these codes do not match, then no unlock signal is sent to the actuator 15. Moreover, the processor 25 records the fact that an incorrect code has been input. In the presently described embodiment, the processor 25 is configured to permit three incorrect input code attempts to be made before entering a state wherein further attempts at inputting a code are not accepted for a period, i.e. users are 'locked-out'. This period is, for example, five minutes. Thus, unauthorised access to the box 1 by trying a large number of input code possibilities is effectively prevented. The skilled person will recognise that other numbers of permitted attempts and 'lock-out' periods with a different duration can equally be employed.

The processor 25 also has electrical connections to the weighing means 2, the lock sensing means 16 and the communication means 4. Thus, information from the weighing means 2 and the lock sensing means 16 can be conveyed to the processor 25, and information can be exchanged between the processor 25 and communication means 4.

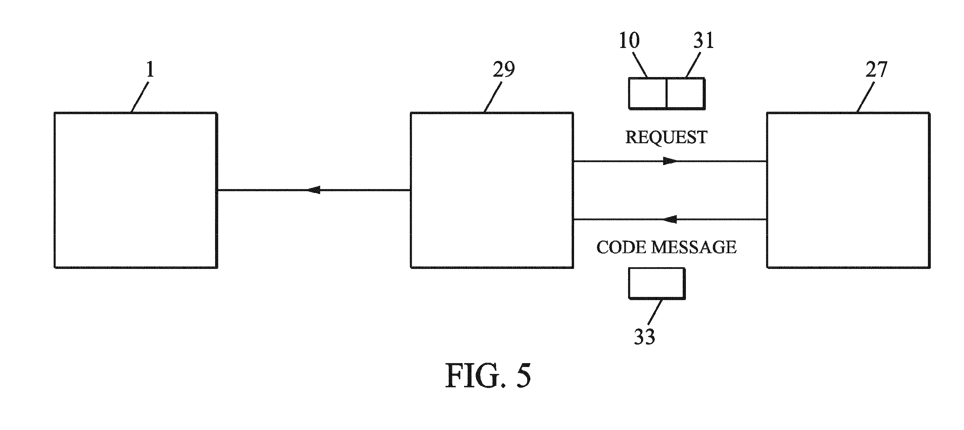

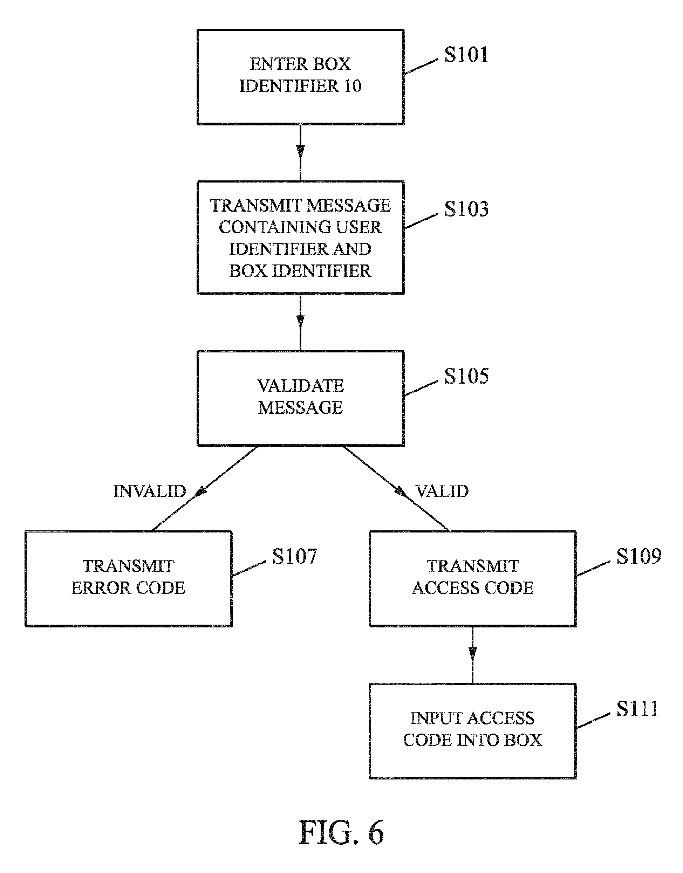

There now follows a description of an apparatus and method for providing access codes to a user of the box 1 with reference to Figures 5 and 6. Typically, the provision of access codes is effected using a remote server 27. The remote server 27 has a wireless connection with a user device 29. The user device 29 can, for example, comprise a smart phone or other mobile telephone, or a dedicated device used by a package delivery person. For the purpose of explanation, it will be assumed that the user device 29 is a smart phone.

A user device 29 for use with the present invention is assigned a user identifier 31 in the form of a unique number, this user identifier 31 can, for example, be the GUID of the user device 29, or be a number specially assigned to the user device 29 for the purpose of putting the invention into effect. The user identifier 31 is stored in a memory of the user device 29. With reference to Figure 6, when the user of the user device 29 wishes to request an access code for a box from the server, the user enters S101 the box identifier 10 into the user device 29. In the presently described embodiment this is accomplished by manual input of the box identifier 10 into the user device 29, for example via a keypad or a virtual keypad displayed on a touch screen of the user device 29. Subsequently, a request message comprising both the box identifier 10 and the user identifier 31 is transmitted S103 to a remote server 27. The request message can, for example, take the form of an SMS or an HTTP or HTTPS request. The remote server 27 then performs a validation process S105 to validate the user identifier 10 and the device identifier 31. If the validation process S105 reveals that the combination of user device 29 and box identifier 10 is considered invalid, then the server responds S107 by transmitting a code message 33 containing an error code to the user device 29. Thus, in this instance, access to the box 1 is not possible. The error code can comprise information indicating a reason or reasons why access is not permitted.

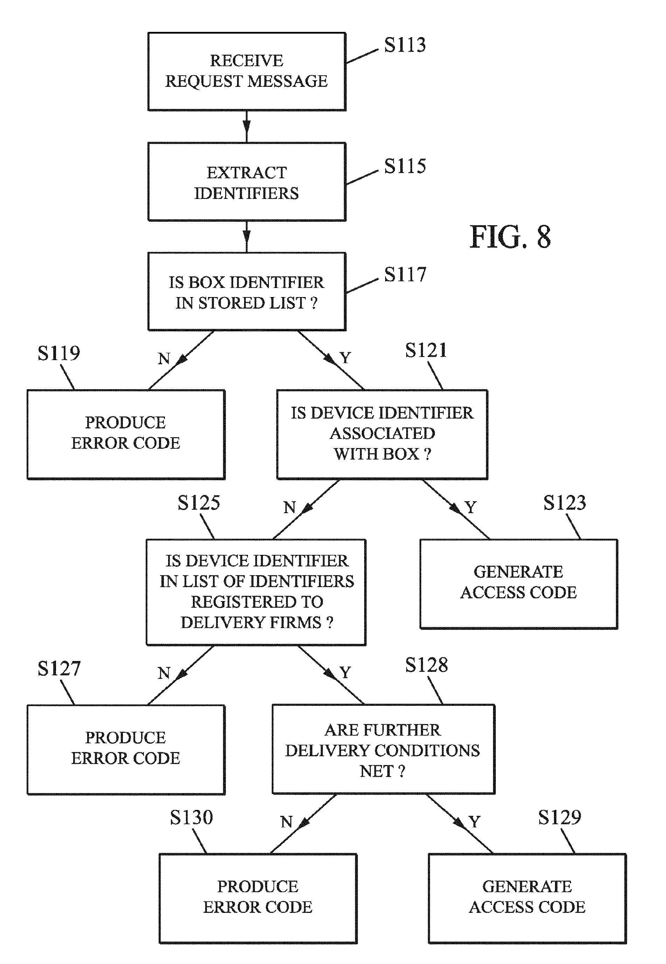

Conversely, if the validation process S105 reveals that the combination of user device 29 and box identifier 10 is considered valid, then the server responds S107 by transmitting a code message 33, containing an access code, to the user device 29. The user can then input S111 this access code into the keypad 13 of the box 1 to gain access to the box 1. The process of validation will be described in greater detail below in relation to Figure 8.

In the presently described embodiment, the user uses software to facilitate the transmission and reception of the messages to and from the server. Thus, the software comprises means to store a user identifier 31, means to receive input of a box identifier 10, means to construct and transmit a message to a remote server, the message comprising the user identifier 31 and the device identifier 10 and means to receive a code message 33 from a remote server 27.

In an alternative embodiment, no dedicated software is employed on the user device 29. Rather, the user sends a short message service (SMS) message to the server to request an access code. The SMS message includes both the box identifier 10, and the user identifier. On receipt of the SMS message, the server will respond appropriately by sending an SMS message in reply, the reply message comprising a code message as per the previous embodiment.

In an alternative embodiment, the message sent to the remote server 27, from either the dedicated software or using an SMS, further comprises information related to the purpose of the access request. This information can include whether the purpose is delivery of a package, collection of a package from the box 1, a signed-for delivery or pick-up or installation/maintenance of the box 1. Further, in the event that the box 1 is shared by two or more users, the purpose information can include information as to which user the access relates.

In an alternative embodiment, the message sent to the remote server 27 can further comprise authentication means for the message. Additionally, or alternatively, the message comprising the access code or error code (as described below) sent from the server 27 to the user device 29 can comprise such authentication. The skilled person will recognise how to provide such authentication, for example using a system of public private keys, and so a further explanation will not be provided here.

In an alternative embodiment, the box identifier 10 is input into the user device 29 automatically by wireless communication with the box 1. Thus, in this embodiment, the communication means 4 for wireless communication with a user device, such as an NFC device, Bluetooth device or the like can be employed for this purpose. Alternatively, a further communication means can also be provided for the purpose of code input and/or obtaining the box identifier. By placing the user device 29 in proximity to the box 1, transfer of the box identifier 10 can be accomplished. The skilled person will recognise that input of the access code into the box 1 can also be accomplished by this wireless means. Thus, in this embodiment, no direct user input is required to obtain access to the box 1. The remaining steps of the method can however be essentially the same as described in relation to the previous embodiments.

In a further embodiment, compatible with any of the previously described embodiments, a password must also be provided to the user device 29 before the remote server 27 will issue an access code. The password can either be validated by the user device or by the remote server 27. In the former case, the skilled person will recognise how to implement a system wherein a password is required to gain access to functions of a user device 29. Therefore further explanation will not be provided here. In the latter case, the message transmitted from the user device 29 to the remote server 27 in step S103 will further comprise a password (or data related to a password) that is input to the user device 29 by a user. Thus, the server can validate the password during the validation step S105. This embodiment has the added advantage that unauthorised use of a user device 29 can be prevented, for example in the event that the user device 29 is lost or stolen.

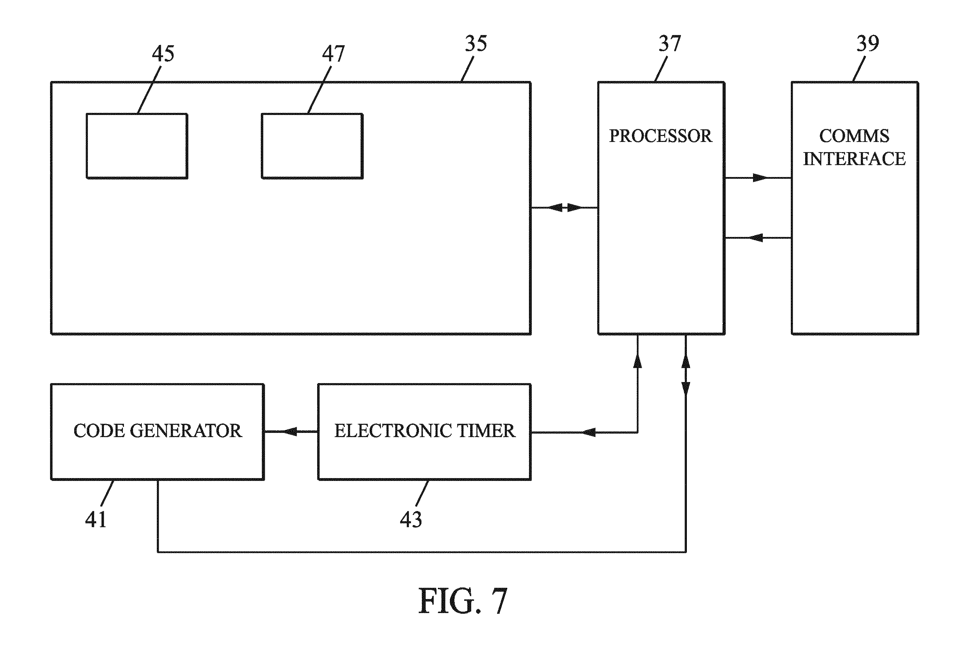

The method of validation of request messages at the remote server 27 will now be described in relation to Figure 7. As illustrated in Figure 7, the remote server 27 includes a memory 35, a processor 37, a communications interface 39, a code generator 41 and an electronic timer 43. The term server as used herein is used to cover any computing device that is capable of providing authentication of a request and subsequent calculation of an access code via a network connection. Moreover, whilst the description of the embodiments provides details of communication directly with a remote server 27, it is specifically envisaged that other computing devices may also be included within a network in which the user device 29 and the remote server 27 exist. Such other computing devices could, for example, be used to provide authentication of the user device to the server and vice versa.

The memory 35 contains details of each box registered to the remote server 27 and each user identifier 31 registered. These details can, for example, be stored in the form of one or more look-up tables (LUTs).

For each box 1, the box identifier 10 is stored and is associated with stored a seed code in a box list 45. The stored seed code can be the same seed code that is stored in the code generator 21 of the box 1. However, this is not necessarily the case, and the seed code can also be a seed code that is merely related to the seed code in the box 1. For each box 1, the memory 35 also stores a list of user identifiers 31 that are registered for access to the particular box 1. In addition the memory 35 further comprises a list 47 of user identifiers 31 that are registered to delivery firms.

Thus, the steps with the validation process S105 will now be described with reference to Figure 8. In step S113 the communications interface 39 receives a request message comprising the box identifier 10 and the device identifier 31. In step S 115, these identifiers 10, 31 are extracted from the message by the processor 37. The processor 37 then examines S 117 the list 45 of box identifiers 10 in the memory 35 to determine whether the box identifier 10 received is on the list 45. If not, then an error code is generated S119. If the box identifier is on the list 45, then the received device identifier 31 is compared S121 with the list of device identifiers 31 registered for that box identifier 10. If the device identifier 31 is registered to the box identifier then the server 27 computes an access code S123.

If the device identifier 31 is not registered to the box identifier 10, then the processor 37 determines S125 whether the device identifier 31 is in the list 47 of device identifiers registered to delivery firms. If the device identifier is not registered in this list 47, then the server 27 generates S127 an error code. If the device identifier 31 is registered in this list 47, then the server 27 checks whether one or more further conditions for provision of an access code are met S128. If the further condition(s) are met, then the server 27 generates an access code S129. If the further condition(s) are not met, then the server 27 generates S130 an error code. The purpose and function of the further condition(s) will be described below.

The processes of generating an access code S123, S129 can be essentially the same as the process of generating access codes carried out in the box 1. Thus, to generate access codes, the code generator 41 applies an algorithm that has inputs including a current time value, as provided by the electronic timer 43 in the server 27 and a seed code related to the box identifier 10. The seed code is stored in the list 45 of box identifiers in the memory 35 of the server 27. Typically, this seed code is the same as that used in the corresponding box 1. Thus, the access codes generated at the server 27 can be made to be identical, or correspond with, those generated in the corresponding box 1 so long as the electronic timer 43 in the server 27 is approximately synchronised with the electronic timer 23 in the box 1.

Once generated, the access code or error code or codes will be transmitted to the user device 29 that made the access request. If an error code(s) is received, the user device 29 will display a message related to the error code(s) on a display of the user device 29. If an access code is received, then a message related to this access code can be displayed. Additionally or alternatively, in embodiments wherein the box 1 is provided with a wireless communications device, the user device 29 can be configured to transmit the access code to the box 1 via a wireless communications method mentioned above such as NFC, Bluetooth, IEEE 802.11 or the like.

In a further embodiment, the server 27 can be configured to refuse to send access codes to a user device 29 if that user device has transmitted multiple access request messages to the server within a predetermined time interval. Thus, for example, if three or more access request messages are received from a particular user device within a period of five minutes, then the server 27 can be configured to refuse to send further access codes to the user device 29 for a period of five minutes. Thus, in such embodiments, undesired multiple access attempts, for example as part of a fraudulent use of a user device, can be addressed in a manner that frustrates such fraudulent use.

In further embodiments, the server 27 can be configured to refuse to send access codes to a user device 29 on the basis of the time or day that the request is made. Thus, for example, if a request for an access code is made by a user device 29 that is registered as belonging to a delivery firm, then the server 27 can be configured to refuse to provide an access code if the request is received during a period when deliveries will not be made. This could be, for example, between the hours of midnight and 6am and/or on a Sunday. The skilled person will recognise that other rules for the provision of access codes based on the request time and/or date can also be implemented.

The skilled person will recognise that the process of synchronising electronic timers and assignment of seed codes can be accomplished during manufacture or during commissioning of the box, and how this can be achieved. Accordingly, the process will not be described in detail here.

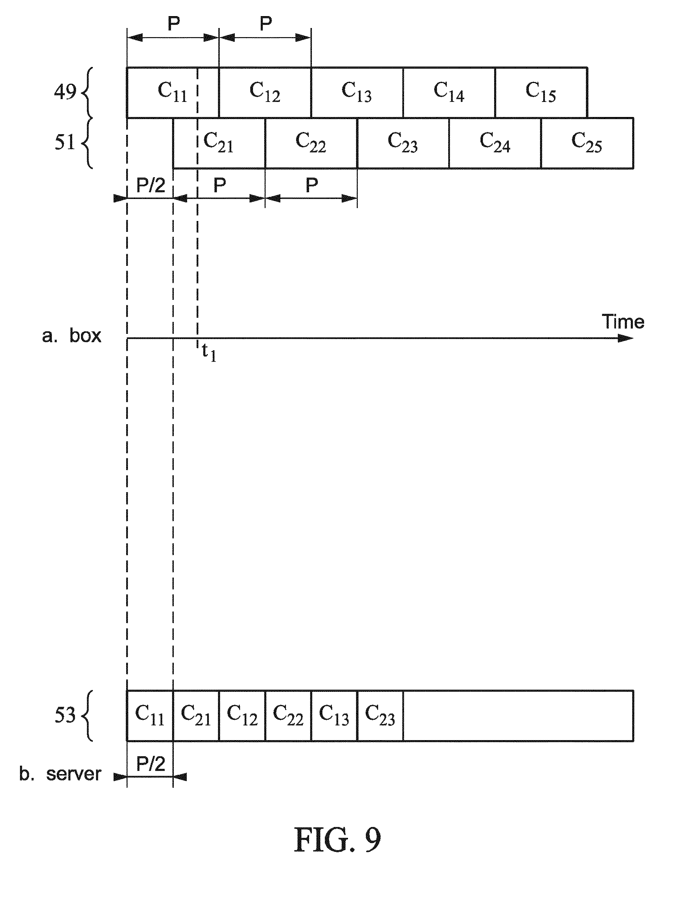

However, the skilled person will also recognise that the electronic timer 23 in a box 1 can gradually lose synchronisation with that 43 provided in a server 27. Since the valid period of a code can be of the order of minutes, this loss of synchronisation will tend to happen over a relatively long period. However, if the electronic timers 23, 43 do become unsynchronised to the extent that the access codes no longer match, then access to the box 1 will become impossible. With this in mind, in a further embodiment, the lock 5 of the box 1 is configured to concurrently generate two sets of access codes (or to concurrently select two sets of access codes from memory in embodiments where the access codes are pre-generated and stored in a memory). With reference to Figure 9a, each access code in each set of access codes 49, 51 is valid for a time period of duration P, and the validity periods of the two sets of access codes 49, 51 are different. Thus, in the example shown in Figure 9, a first access code C₁₁ in the first set of access codes 49 is valid for a period P, which can be, for example, 2 minutes. However, the skilled person will recognise that other validity periods could equally be used. At the end of the validity period for this access code C₁₁, this access code ceases to be valid, and the subsequent access code C₁₂ in this first set 49 becomes valid. Similarly, the second set of access codes 51 is configured in the same manner. Thus at the end of a period of validity of a first code C₂₁ in the second set 51, a second code C₂₂ in the second set becomes valid in place of the first code C₂₁.

However, the validity periods for the two sets 49, 51 are staggered by a period of P/2. Thus half-way through the valid-period of the first access code C₁₁ in the first set 49, the first access code C₂₁ in the second set 51 of access codes also becomes valid. This access code C₂₁ also has a valid period of P, and so there is a period P/2 during which both the code C₁₁ in the first set 49 is valid and the code C₂₁ in the second set 51 are valid. Moreover, each access code in each set has a period of P/2 in which first access code in the other set is also valid and a period of P/2 in which a second access code in the other set is also valid. Thus, to gain access to the box 1 at a given time t₁, either an access code C₁₁ in the first set 49 can be input or an access code C₂₁ in the second set 51 can be input.

With reference to Figure 9b, the remote server 27 is configured to provide access codes 53 that vary with a period of P/2 and that alternate between a code from the first set 49 as generated by the box 1 and then one from the second set 51 as generated by the box 1. Thus, a code request at a given time would result in access code C₁₁ being provided, whist a request at a time P/2 later would result in access code C₂₁ being provided. The subsequent order of access codes would be C₁₂, C₂₂, C₁₃, C₂₃ and so forth.

Thus, if the electronic timer 23 at the box 1 and that 43 at the server 27 are perfectly synchronised (ignoring the time taken between code generation and code input), then during the first half of the period in which particular code C₁ₓ from the first set of codes 49 is valid at the box 1, the box 1 will tend to receive C₁ₓ. Similarly, during the second half of the period at which C₁ₓ is valid at the box 1, the box 1 will tend to receive code C₂ₓ.

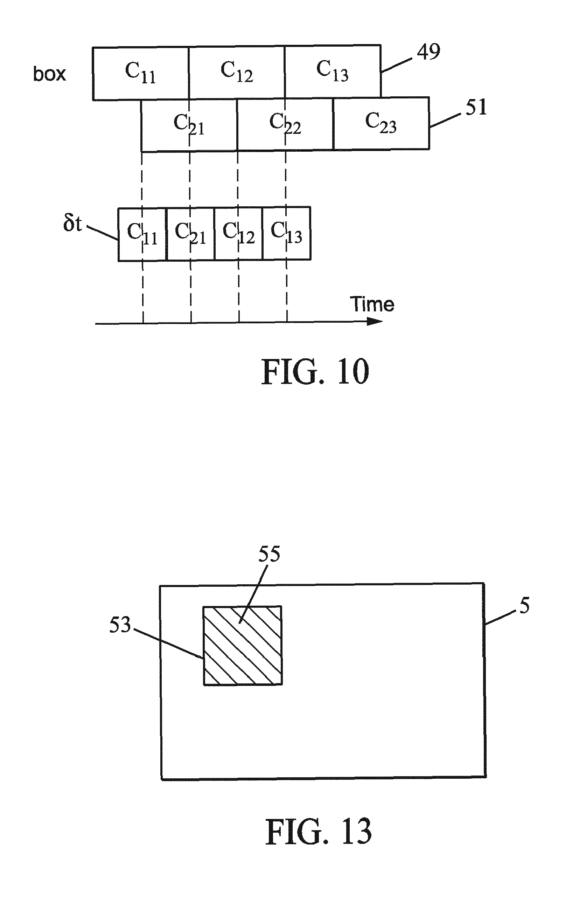

Figure 10 illustrates the situation if the electronic timer 43 in the server 27 is a time δt behind that of the electronic timer 23 in the box 1. As is clear from the Figure, in such a situation, the box 1 will tend to receive code C₁ₓ during a period δt of the second half of the period when code C₁ₓ is valid at the box 1, and also during the period (P/2-δt) of the first half of the period when the code C₁ₓ is valid at the box 1.

The skilled person will recognise that, if the box 1 tends to receive, over a number of access attempts, access code C₁ₓ during the second half of the period during which this access code is valid at the box 1, then it can be inferred that the time registered in the electronic timer 43 in the server 27 is behind that of the electronic timer 23 in the box 1. Conversely, if the box 1 tends to receive access code C₂ₓ during the first half of the period during which this access code is valid at the box 1, then it can be inferred that the time registered in the electronic timer 43 in the server 27 is ahead of that of the electronic timer 23 in the box 1.

Accordingly, in this embodiment, the processor 25 in the lock 5 of the box 1 is further configured to assess whether the time registered in the electronic timer 23 should be adjusted and, if necessary, adjust the electronic timer 23 accordingly. This assessment can be on the basis of the input time of a plurality of valid input codes relative to their respective periods of validity. Thus, a statistical treatment of the input time and/or the adjustment to the electronic timer 23 can be used.

Moreover, by judging the point in the second half of the period during which a received code is valid at the box 1, information regarding the magnitude of the discrepancy between the times registered in the electronic timers 23, 43 can be estimated. The skilled person will recognise that some degree of discrepancy between the electronic timers 23, 43 is desired since it will take a finite amount of time to transmit an access code from the server 27 to a user device 29 and subsequently input the access code into the box 1. However, this discrepancy can effectively be ignored in this analysis, since the optimum synchronisation between the electronic timers 23, 43 can be defined to be related to when access codes are actually input to the box 1. By synchronising using the times that access codes are actually input into the box 1, the relative timing of the electronic timers 23, 43 will tend to this optimum synchronisation.

However, the skilled person will recognise that the means by which an access code is input into the box 1 will have an effect on the perceived state of synchronisation. This is because, in general, it will take a longer period of time for a user to input an access code manually than it would for such an access code to be transmitted by wireless means. Thus, in embodiments wherein input of access codes can be effected by two or more means, the means of input is stored in a memory of the controller 17 together with data relating to the fraction of the validity period that has elapsed when the access code was input into the box 1. Thus, due account can be made of the time taken to input the code. This can be made by, for example, assuming that manual input of an access code takes 10 seconds from generation to input, while wireless input of an access code takes 2 seconds. The skilled person will recognise that these time periods for access code input are merely examples and other assumed periods can also be employed.

Thus, to perform adjustment of the electronic timer 23 of the box 1, a memory associated with the controller 17 stores data with details of the fraction of the validity period that has elapsed when each access code is input into the box 1, and possibly also details of the means by which the access code was input (manually or by wireless communication means). This data is maintained for a number of access code inputs so that a statistical treatment of the input time relative to the validity period can be made. Subsequently after a number of code inputs, in this embodiment 10, the controller 17 determines whether an adjustment to the electronic timer need be made. An adjustment is deemed necessary if, on average, an access code is input within the last 25% of the validity period. The applied adjustment is a fraction of the difference between the centre of the validity period and the average code input time relative to the validity period.

The skilled person will recognise that different algorithms, such as using a number of code inputs other than 10, can equally be employed without departing from the scope of the invention.

In further embodiments higher numbers of valid access codes can be employed. Thus, for example, three sets access codes can be calculated (or stored in a memory) for the box 1. Each of these sets can have a valid period that either overlaps that of the other sets by one third of the valid period for any given access code, or that is staggered by half of the access code validity period. Thus, in such embodiments, the accuracy of information related to any time offset between the electronic timers 23, 43 can be improved and so an improved synchronisation can be achieved.

In such an embodiment employing three sets access codes, wherein a first set of access codes has a validity period that is staggered by one third of the validity period with respect to a second set and a third set of access codes has a validity period that is staggered by a further one third of the validity period with respect to the second set, synchronisation between the electronic timers can be determined as follows:
In this embodiment, the lock 5 of the box 1 is configured to concurrently generate three sets of access codes (or to concurrently select three sets of access codes from memory in embodiments where the access codes are pre-generated and stored in a memory). Each access code in each set of access codes 49, 51, 52 is valid for a time period of duration P, and the validity periods of the three sets of access codes 49, 51, 52 are different. Thus, in this example, a first access code C₁₁ in the first set of access codes 49 is valid for a period P, which can be, for example, 2 minutes. However, the skilled person will recognise that other validity periods could equally be used. At the end of the validity period for this access code C₁₁, this access code ceases to be valid, and the subsequent access code C₁₂ in this first set 49 becomes valid. Similarly, the second and third sets of access codes 51, 52 are configured in the same manner. Thus at the end of a period of validity of a first code C₂₁ in the second set 51, a second code C₂₂ in the second set becomes valid in place of the first code C₂₁ and at the end of a period of validity of a first code C₃₁ in the third set 52, a second code C₃₂ in the third set becomes valid in place of the first code C₃₁

However, the validity periods for the three sets 49, 51, 52 are staggered by a period of P/3. Thus one third of the way through the valid-period of the first access code C₁₁ in the first set 49, the first access code C₂₁ in the second set 51 of access codes also becomes valid. This access code C₂₁ also has a valid period of P, and so there is a period 2P/3 during which both the code C₁₁ in the first set 49 is valid and the code C₂₁ in the second set 51 are valid. Two-thirds of the way through the valid-period of the first access code C₁₁ in the first set 49, the first access code C₃₁ in the third set 52 of access codes also becomes valid. This access code C₃₁ also has a valid period of P, and so there is a period P/3 during which both the code C₁₁ in the first set 49 is valid and the code C₃₁ in the third set 52 are valid. During this period, the first code C₂₁ in the second set 51 is also valid.

Moreover, at any particular time three access codes, one from each set 49, 51, 52 will be valid. Thus, to gain access to the box 1 at a given time t₁, an access code C₁₁ in the first set 49 can be input, an access code C₂₁ in the second set 51 can be input or an access code C₃₁ in the third set 52 can be input.

The remote server 27 is configured to provide access codes 53 that vary with a period of P/3 and that cycle between a code from the first set 49 as generated by the box 1 and then one from the second set 51 as generated by the box 1, then one from the third set 52 as generated by the box 1, and subsequently back to a code from the first set 49. Thus, a code request at a given time would result in access code C₁₁ being provided, whist a request at a time P/3 later would result in access code C₂₁ being provided and at a time a further P/3 later would result in access code C₃₁ being provided. The subsequent order of access codes would be C₁₂, C₂₂, C₃₂, C₁₃, C₂₃, C₃₃ and so forth.

In this embodiment, the electronic timer 43 in the server 27 is initially synchronised such that each access code will be provided by the server 27 at a time corresponding to the centre third if the validity period of that access code at the box 1. As with other embodiments, the input method e.g. manual or via wireless means, of the access codes can be taken into account during the synchronisation process.

Taking the arbitrary time t₁ as a time at which an access code is input to the box 1, this happens to occur during the centre third of the validity period of a code in the second set 51 (C₂₁). If an access code (C₁₁) from the first set 49 is received, and is valid at the time of reception, then the time stored in the electronic timer 23 of the box 1 is deemed to be in advance of that stored in the electronic timer 43 of the server 27. Conversely, if an access code (C₃₁) from the third set 52 is received, and is valid at the time of reception, then the time stored in the electronic timer 23 of the box 1 is deemed to be behind that stored in the electronic timer 43 of the server 27. If an access code (C₂₁) from the second set 51 is received, and is valid at the time of reception, then the time stored in the electronic timer 23 of the box 1 is deemed to be consistent with that stored in the electronic timer 43 of the server 27.

As a further example, taking the arbitrary time t₂ as a time at which an access code is input to the box 1 this happens to occur during the centre third of the validity period of a code in the third set 52 (C₃₂). If an access code (C₂₂) from the second set 51 is received, and is valid at the time of reception, then the time stored in the electronic timer 23 of the box 1 is deemed to be in advance of that stored in the electronic timer 43 of the server 27. Conversely, if an access code (C₁₃) from the first set 49 is received, and is valid at the time of reception, then the time stored in the electronic timer 23 of the box 1 is deemed to be behind that stored in the electronic timer 43 of the server 27. If an access code (C₃₂) from the third set 52 is received, and is valid at the time of reception, then the time stored in the electronic timer 23 of the box 1 is deemed to be consistent with that stored in the electronic timer 43 of the server 27.

In general, the box 1 will expect any particular access code to be input during the centre-third of its validity period. If, instead, it receives an access code during the final third of its validity period then the then the time stored in the electronic timer 23 of the box 1 is deemed to be in advance of that stored in the electronic timer 43 of the server 27. Conversely, if the box 1 receives a code during the first third of its validity period then the then the time stored in the electronic timer 23 of the box 1 is deemed to be behind that stored in the electronic timer 43 of the server 27.

As with the embodiments in which two sets of codes are employed for resynchronisation purposes, a statistical treatment of the input time of several access codes relative to their validity periods at the box 1 can be used. Thus, an adjustment to the time of the timer 23 in the box 1 can be made after, for example, 10 access codes have been input, and the adjustment based on an average of the input time relative to the validity periods of the receved codes, taking into account the input method(s) used to input the access codes.

In alternative embodiments, the server 27 takes account of the variable delay between issue of an access code and subsequent input of the access code into a box 1 caused by the method of input of the access code. Thus, for example, if the server 27 determines that an access code will be input to a box 1 by manual input via a keypad, then the server 27 can temporarily adjust the time registered by its electronic timer 43 to take account of the delay. Thus, in such a circumstances the time registered by the electronic timer 43 in the server 27 can be adjusted to be some time later than the true time (e.g. 10 seconds) to remove any effective de-synchronisation between the electronic timer 23 in the box 1 and that 43 in the server 27. The skilled person will recognise that a different (smaller) delay, or no effective delay can be assumed in the event that an access code is input by wireless communication means.

In such embodiments, the server 27 can determine the method by which an access code is likely to be input from knowledge of the box 1 and the user device 29 that made the access request related to the box 1. Therefore, in such embodiments, the LUTs 45, 47 stored in the memory 35 of the server 27 will further comprise information as to whether the box 1 and/or the user device 29 support wireless communications. Information regarding the type of wireless communications supported by the box 1 and the user device 29 can also be stored. If both the box 1 and the user device 29 support a compatible type of wireless communications, e.g. both support NFC, then it can be assumed by the server 27 that an access code will be input by such means. Conversely, if one or both do not support wireless communications, or both support wireless communications but in a form that is not mutually compatible, then the server 27 can assume that the access code will be input by manual means. Based on this determination, a temporary adjustment to the electronic timer 42 in the server 27 can be applied before calculating the access code, if such a delay is required by the assumed input method as described above.

In alternative embodiments, synchronisation of the electronic timers 23, 43 in the box 1 and/or the server 27 can be achieved using an externally provided clock signal, such as the DCF77 time signal or signals from satellites such as GPS satellites. Thus, in such embodiments the box 1 and server 27 will further comprise receivers for such time signals and means to synchronise (with any necessary offset) the electronic timers 23, 43 with the received time signals.

In further alternative embodiments, synchronisation of the electronic timers 23, 43 in the box 1 and/or the server 27 can be achieved using externally provided timing information that is transmitted to the box 1 from a user device 29 by wireless methods, such as near field communications (NFC), Bluetooth, IEEE 802.11 or the like. In such embodiments, each time a user device 29 undergoes a dialog with the box 1 via such wireless means, a request is generated by the user device 29 for both the local time of the box 1 (as registered in the electronic timer 23) and the corresponding local time in the electronic timer 43 of the server 27. If responses are received from both the server 27 and the box 1 within a predetermined time interval, for example 2 seconds, then a comparison of the times is made on the user device 29. The difference in times (if any) is sent by the user device 29 to the server 27 in the form of a message. The server 27 then stores a record of the discrepancies and, in the event that a discrepancy is deemed unacceptable, for example if it exceeds a predetermined fraction of the validity period of an access code, a correction can be ordered by the server 27. The correction can take the form of a message transmitted from the server 27 to the user device 29 and on to the box 1 to correct the time in the electronic timer 23 of the box 1 by a certain amount, defined in the message.

In any of the above described embodiments, an owner of the box 1 can be informed of when the box 1 has been accessed, or indeed of whether a disallowed access attempt has been made. Thus, for example, in the event that an access code or an error code/message has been sent by the server 27 in response to a received access request, the server 27 can be configured to send a message to the owner of the box 1 indicating that the event has occurred. The message can include information regarding the event and/or of the user device making the request. The message can be sent, for example to a preregistered email address stored in association with the box identifier 10 in the memory 35 of the server 27. Alternatively, or additionally, a message can be sent to the user device 29 that is registered as belonging to the owner of the box 1. Thus, in such embodiments, the owner of the box 1 can have information of when deliveries or collections have been made and by whom, and/or of who made unsuccessful access requests.

In further embodiments, the box 1 can comprise a plurality of separate sections which are accessible to different users. Thus, a plurality of door panels are provided, with each door panel giving access to a different section. Each door panel has a separate lock, which will have a particular access code for any given time period, while the box can have a single box identifier 10. The locks can all be controlled by a single processor 25. Access to the different sections can be controlled on the basis of the user identifier 31 of the user making the request. Thus, for example if an access request is received from a user device 29 having a user identifier 31 that is registered as belonging to a delivery firm, then an access code for opening a first section of the box 1 can be provided, for example for delivery of a package. In contrast, if an access request is received from a user device 29 that is registered to a third party, such as for example a cleaner for the property at which the box is located, then an access code for opening a second section of the box 1 can be provided. This second section can, for example, be used to store a mechanical key to the property at which the box is located. Additionally, if an access request is received from a user device 29 that is registered to an owner of the box 1, then an access code for opening all sections of the box 1 can be provided. The skilled person will recognise that this embodiment provides the advantage that a box 1 can be configured to allow controlled access to the contents of the box to particular individuals in a manner that can be controlled remotely.

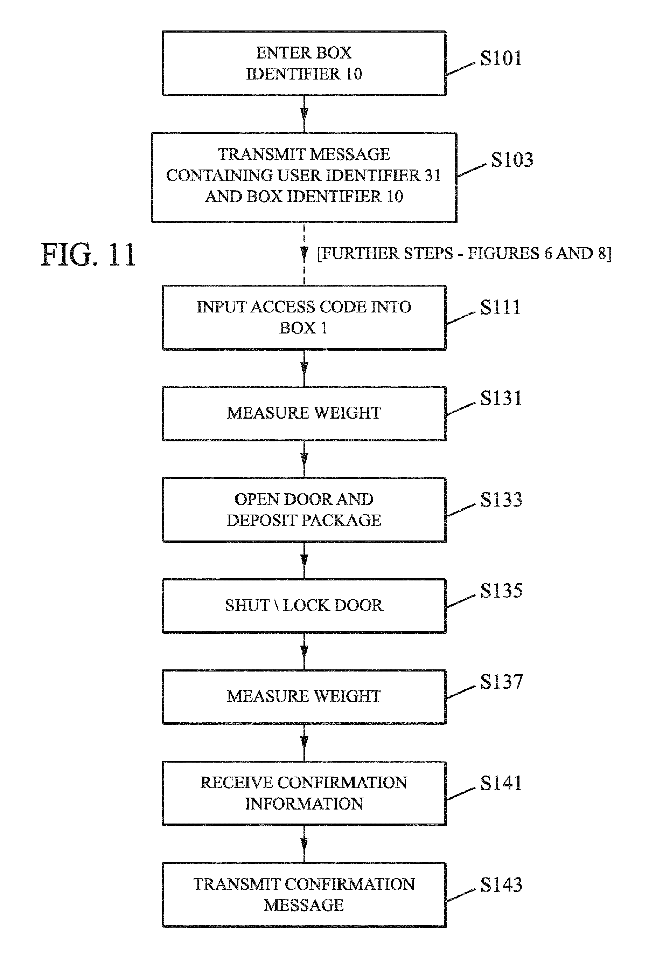

The process of accessing the box 1 specifically for the purpose of delivery of a package to the box 1 by a delivery person will now be explained in further detail with reference to Figure 11. As per the general method of obtaining an access code described with reference to Figure 6, the delivery person obtains an access code by entering the box identifier into their user device 29 S101 and transmitting the message containing the user identifier and box identifier S103. The process of validation of the message are essentially identical to those described with reference to Figures 6 and 8, and so will not be repeated here. Upon receipt of the access code, the delivery person inputs the access code S111 to obtain access to the box 1. Upon input of the access code, and prior to unlocking the lock 5, the box 1 is triggered to take a measurement S131 of the weight of the contents of the box 1 by using the weighing means 2. This measurement is stored in the memory of the box 1. Once the lock 5 is unlocked, the delivery person can deposit the package for delivery into the box 1 and shut the door 3 S135, which will then lock shut. The sensing means 16 then determines whether the door 3 is locked shut, and this information is passed to the controller 17. If the door 3 is not locked shut, then the controller 17 can be configured to provide feedback to the delivery person requesting that the door 3 be shut. This feedback can, for example, take the form of a audible sound or visual indication. Receipt of a signal from the sensing means 16 indicating that that the door is locked shut then acts as a trigger for the box 1 to take a second measurement of the weight of the contents of the box 1 S137 using the weighing means 2, again the result of the measurement is stored in the memory of the box 1. To complete the delivery process, the user device 29 of the delivery person then needs to receive confirmation information from the communication means 4 of the box 1. Thus, in embodiments where the communication means 4 uses NFC, the delivery person can hold their user device 29 close to the communication means 4 to effect transfer of the confirmation information from the box 1 to the user device 29 S141. Upon receipt of the confirmation information, the user device 29 will transmit S 143 a confirmation message to the remote server 27. The transmission S 143 of the confirmation message can be made automatically by the user device upon receipt of the confirmation information from the box 1, or as a result of a prompt to the delivery person. The content of the confirmation information can comprise information indicative of the weight of the package delivered. Thus, the confirmation information can comprise a measure of the difference between the measurements of the weight of the contents of the box 1 before the door 3 was opened, and after the door 3 was shut. Alternatively, the confirmation information can simply comprise a flag indicating that the weight of the contents of the box has increased during the delivery process thus indicating that something has been placed in the box 1. Thus, the remote server 27 can be provided with a confirmation that the delivery has been made, and optionally with a measurement of the weight of the delivery.

In the event that the measurement of the weight after closing/locking the door 3 is not greater than that made prior to opening the door 3, then an error code can be generated. This code can either be generated by the box 1, or the remote server 27. If the error code is generated by the box 1, then it can be transferred firstly to the user device 29 by the communication means 4, and from the user device 29 to the remote server 27 in the form of a message.

When the remote server 27 either receives a message containing such an error code, or generates on from confirmation information received, the remote server 27 can optionally transmit a message to the user device 29 of the delivery person and/or that of the owner of the box to indicate a problem with the delivery. Further, the remote server 27 can also transmit a message indicating the problem to a server of a delivery company. If the measurement of the weight after closing the door 3 is the same as that made prior to opening the door 3, then the server 27 can determine that no package was delivered and transmit messages as described above providing this information. Conversely, if the weight after closing the door 3 is less than that made prior to opening the door 3 (for example if a package was already present in the box 1 at the time of delivery and was removed), then the remote server 27 can determine that a package has been removed by the delivery person, and send messages as described above providing this information.

The skilled person will recognise that the remote server 27 can be provided with information of the approximate weight of a package to be delivered prior to delivery. This information can, for example, be provided by a company handling the delivery. Therefore, upon receipt of a confirmation message containing the weight information, the remote server can compare the measured weight of the package with the expected weight to act as a further confirmation that the package was correctly delivered. This comparison can also take into account the user identifier 31 of the delivery person making the delivery, to provide further confirmation that the package delivered is as expected. This can be achieved by confirming that a package of the measured weight was expected from the company represented by the delivery person having that user identifier 31. In such a situation, the remote server 27 can be configured to transmit a confirmation message to the user device 29 of the owner of the box 1 and/or a server of the delivery company. Further, the remote server 27 can also send a message to another third party, such as the sender of the package.

In further embodiments, the weighing means 2 in the box 1 can additionally be used to provide control of access to the box 1 in the event that a package is already present in the box 1. Thus, for example, if the weighing means 2 measures that a package having a large weight has been delivered to the box 1, then it may be appropriate to prevent access to the box for further deliveries, since it could be assumed that there would be insufficient space remaining in the box 1. In such embodiments, the remote server 27 will receive a confirmation message resulting from a previous delivery as described above. As described above, the confirmation message will (in these embodiments) include information of the weight of the package, or the sum of the weights of the packages if more than one package has already been delivered in one or more deliveries. With reference to Figure 8, the remote server 27 then determines S128 whether further delivery conditions are met. In this instance, the determination S128 comprises comparing the current measured weight in the box 1, as previously received in one or more confirmation messages arising from deliveries, with a maximum allowable contents weight for the box 1. The maximum allowable contents weight for the box 1 is stored as a parameter in the remote server 27, and can depend on the particular box 1. Therefore, the maximum allowable contents weight can be stored in the box list 45 in the memory 35 of the remote server 27. If the determination S128 of whether the further delivery conditions are met reveals that the maximum allowable contents weight for the box 1 has been met or exceeded, then the server 27 will generate an error code S130. If the maximum allowable contents weight for the box 1 has not been met, then the remote server 27 will generate an access code S129.

In further embodiments, the remote server 27 can take account of the weight of a package to be delivered in determining S128 whether the further delivery conditions are met. Thus, in such embodiments, the remote server 27 receives information regarding the weight of a package that is to be delivered prior to the delivery. This information can, for example, be transmitted to the remote server 27 from the server of a delivery company. Thus, in determining S128 whether the further delivery conditions are met, the remote server 27 will determine whether the sum of the current contents weight of the box 1 and the weight of the package to be delivered exceeds the maximum allowable contents weight for the box 1 stored in the remote server 27. If so, then the server 27 will generate an error code S130. If the maximum allowable contents weight for the box 1 will not be exceeded, then the remote server 27 will generate an access code S129.

In further embodiments the remote server 27 can make the determination S128 of whether the further delivery conditions are met merely based on the number of packages present in the box 1. For such embodiments, the confirmation information provided during delivery S141 can simply comprise a flag indicating that a package has been delivered. Thus, upon receipt of the confirmation information (by the methods described above), the remote server 27 will maintain a count of the number of flags received since the box 1 was last accessed by the owner of the box 1. In such embodiments, in determining S128 whether the further delivery conditions are met, the remote server 27 will determine whether the sum of the number of flags received meets or exceeds a predetermined number. If so, then the server 27 will generate an error code S130. If the maximum allowable number of flags for the box 1 will not be exceeded, then the remote server 27 will generate an access code S129.

In any of the above described embodiments for the delivery of a package, the remote server 27 can assume that all packages that are present in the box 1 will be removed by the owner of the box 1 when they access the box 1. Thus, upon production of an access code S123 for the owner of the box 1, the remote server 27 can reset the stored number of flags indicating the number of delivered packages to zero. Alternatively, in embodiments wherein a record of the weight of the contents of the box is maintained in the remote server 27, then this can be set to zero.

In alternative embodiments, the remote server 27 can maintain a record of the weight of the contents of the box 1 by mandating that confirmation information is sent using steps S137, S141 and S143 as described above in relation to Figure 11 each time that the box 1 is accessed (by any user). Thus, in such embodiments any user, including the owner of the box 1, must follow the steps of the method described in relation to Figure 11 to access the box 1. By using such embodiments, the remote server 27 can maintain a more accurate record of the contents of the box 1.

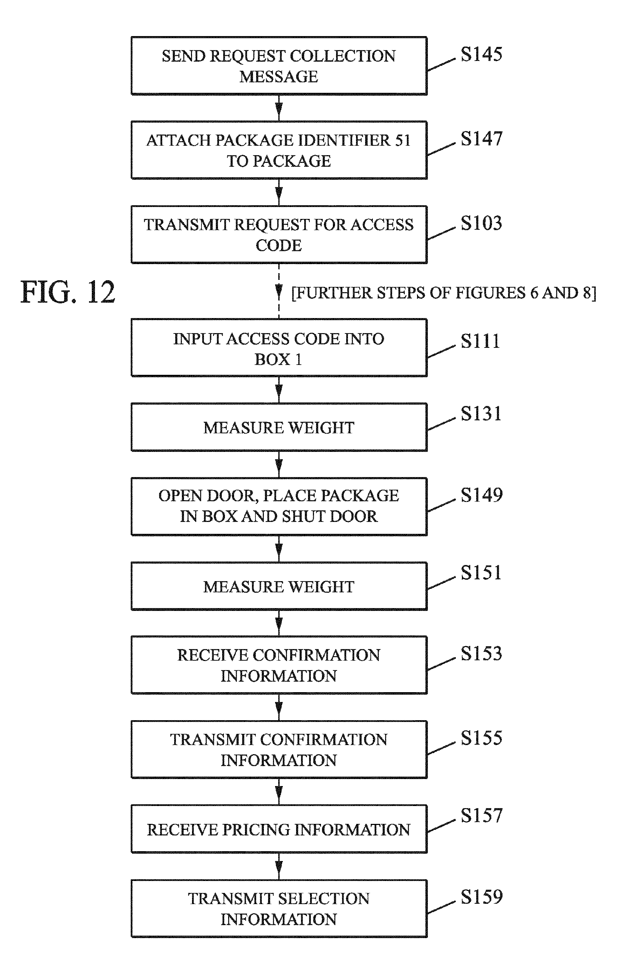

There now follows a description of methods for permitting a user of the box 1 to request collection of a package from the box 1. Such methods can, for example, be used to allow the user of the box 1 to send a package by post without needing to take the package to, for example, a post-office. The methods are described with reference to Figures 12 and 13.

Initially, a user registered as the owner of the box 1 makes a request S145 for collection of a package. The request takes the form of one or more messages transmitted from a user device 29 of the owner of the box 1 to the remote server 27. For this purpose, the user device 29 can be a smartphone or other portable device as described previously, or alternatively, can be a further user device 29 that is registered as belonging to the owner, such as a personal computer. The content of the one or messages will comprise information indicating the identity of the owner of the box 1, the box identifier 10, a package identifier number 55 from a package identifier 51 and the address for delivery of the package to be collected. The skilled person will recognise that further information can also be transmitted in the message(s), such as an indication of a desired means, or class, of collection (e.g. first-class post, second-class post, overnight delivery etc).

Examples of the package identifier 51 are illustrated in Figure 13. The package identifier 51 comprises piece of paper, or other planar material, with a code section 53. The code section 53 contains a means for identifying the package in the form of a package identifier number 55. The code section can, for example, comprise a barcode, a number, an RFID tag, a pattern such as a QR code (data matrix) or other such code. Typically, but not necessarily, the code in the code section 53 will be unique so that each package can be uniquely identified by a unique package identifier number 55. The package identifier 51 can be provided to the owner of the box 1 ready-made, or alternatively electronically for printing by the owner of the box 1. Optionally, the package identifier 51 can also include a portion in which the delivery and/or sender's address can be written or printed.

If the package identifier 51 is provided ready-made, or has been pre-printed by the owner of the box 1 after electronic receipt, then the package identifier number 55 can be obtained by the user device 29 by, for example taking a photograph of the package identifier 51 using a camera on the user device 29 or a scanning function. Alternatively, if the package identifier 51 comprises an RFID tag, then an NFC communication device I the user device 29 can be used to access the package identifier number.

In alternative embodiments in which the package identifier 51 is sent electronically to the owner of the box 1, the package identifier 51 can be generated upon receipt of the request S145 for collection of the package. In such embodiments, the message(s) S145 requesting collection of the package will not contain the package identifier 51 since this is generated by the remote server 27 and therefore known to it.

Referring back to Figure 12, upon transmission of the request S145 for collection of a package (or optionally prior to transmission of the message), the owner of the box 1 attaches S147 the package identifier 51 to the package to be collected. The owner of the box then transmits a message S103 to the remote server 27 requesting an access code for the box 1 in the manner described above in relation to Figure 6. This message, in addition to the box identifier 10 and the identifier of the user device 29 of the owner of the box 1, will contain an indication that the request is for the purpose of requesting the collection of a package. Upon receipt of an access code the owner of the box 1 then inputs the code S111 into the box 1 by the manner described above in relation to Figure 6 to gain access to the box 1.

Upon input S111 of the access code, and prior to unlocking the lock 5, the box 1 is triggered to take a measurement S131 of the weight of the contents of the box 1 by using the weighing means 2. This measurement is stored in the memory of the box 1. Once the lock 5 is unlocked, the owner of the box 1 can deposit the package for collection into the box 1 and shut the door 3 S149, which will then lock shut. As described in relation to figure 11, the sensing means 16 then determines whether the door 3 is locked shut, and this information is passed to the controller 17. If the door 3 is not locked shut, then the controller 17 can be configured to provide feedback to the user requesting that the door 3 be shut. This feedback can, for example, take the form of a audible sound or visual indication. Receipt of a signal from the sensing means 16 then acts as a trigger for the box 1 to take a second measurement of the weight of the contents of the box 1 S151 using the weighing means 2, again the result of the measurement is stored in the memory of the box 1. To complete the process for requesting collection of the package, the user device 29 of the owner of the box 1 then needs to receive confirmation information from the communication means 4 of the box 1. Thus, in embodiments where the communication means 4 uses NFC, the box 1 owner can hold their user device 29 close to the communication means 4 to effect transfer of the confirmation information from the box 1 to the user device 29 S153. Upon receipt of the confirmation information, the user device 29 will transmit S155 a confirmation message to the remote server 27. The transmission S155 of the confirmation message can be made automatically by the user device upon receipt of the confirmation information from the box 1, or as a result of a prompt to the owner of the box 1 via the user device 29.

As described above in relation to the delivery process of Figure 11, the content of the confirmation information can comprise information indicative of the weight of the package deposited in the box 1. Thus, the confirmation information can comprise a measure of the difference between the measurements of the weight of the contents of the box 1 before the door 3 was opened, and after the door 3 was shut. Alternatively, the confirmation information can simply comprise a flag indicating that the weight of the contents of the box has increased during the delivery process thus indicating that something has been placed in the box 1. Upon receipt of the confirmation information, the remote server 27 transmits a message to the user device 29 of the box 1 owner providing pricing information, the message is then received by the user device 29 S157. The pricing information can, for example comprise a plurality if pricing options for different postage options. In embodiments where the confirmation information includes weight information, the pricing information can be based on the information of the measured weight of the package as transmitted in the confirmation information message S155. The skilled person will recognise that various options for a relatively faster/slower method of postage, a recorded delivery, an insurance of the package contents etc can be offered in the pricing information message S157. The pricing information can be presented to the owner of the box 1 in the form of options on a screen of the box owner's user device 29.

Upon selection by the box owner of a desired delivery method by selection of one of the options provided, a further message S159 comprising information of the selection made by the box owner is transmitted to the remote server 27 form the user device 29. In this embodiment, the transmission S159 of the selection information constitutes a formal acceptance by the box owner of the terms for collection and so the method of requesting a collection is complete. However, the skilled person will recognise that further steps, such as directly billing the box owner for the cost of the package collection can also be undertaken by well-known methods of remote billing. Therefore, further details will not be provided here. The method of accessing the box 1 by an operative of a company assigned to collect a package deposited in the box 1 by the method described in relation to Figure 13 can essentially be the same as that described in relation to Figure 11 for the delivery of a package. However, the skilled person will recognise that in step S133, rather than depositing a package, the package is removed from the box 1 i.e. it is collected. Thus, during the collection process, the remote server 27 can compare the two measurements of the weight S131, S137 to determine whether a package of the expected weight has been removed from the box 1. If not, then an error code can be generated and optionally transmitted to the user device 29 of the owner of the box 1 and/or the collection company. If the weight difference is as expected, then a message indicating confirmation of a successful collection can be transmitted to the user device 29 of the owner of the box 1 and/or the collection company.

There now follows a description of methods of ensuring that the calculated access codes for accessing the box 1 are suitable for the particular embodiment in which they are employed. In all of the above described embodiments, different sets of access codes will be required to deal with situations in which the behaviour of the box 1, 101 must be different depending on the user, or if the box comprises more than one section. To generate the multiple sets of access codes, the code generators 21, 41 in the box 1, 101 and server 27 respectively can either employ multiple seed codes, or multiple code generation methods using a single seed code. Thus, in embodiments where there are three user types, three seed codes can be stored in each of the server 27 and the box 1, 101. The box 1, 101 will be configured to register access codes from each of the seed codes as valid for any given time as previously described. The server 27 will be configured to generate an access code that is relevant to the user type in question as determined from the user identifier received in the access request message.

In alternative embodiments where there are three user types, three code generation algorithms can be stored in each of the server 27 and the box 1, 101. Each of the code generation algorithms is capable of generating a different access code at any given time using the same seed code. The box 1, 101 will be configured to register access codes from each of the code generation algorithms as valid for any given time as previously described. The server 27 will be configured to generate an access code that is relevant to the user type in question as determined from the user identifier received in the access request message.

In further embodiments, a plurality of boxes 1, 101 can be placed together to form a locker station, for example at a public place such as a railway station, airport, town hall, shopping centre or post office. In such embodiments, the plurality of boxes 1, 101 will share a common input means for access codes, such as a keypad 13 or wireless input means. A delivery person will, on arrival at the locker station, request an access code from the remote server 27 by any of the means described in relation to previous embodiments except that the identifier 10 of the box 1, 101 will not form a part of the access request. Rather, an identifier of a user will be substituted for the identifier 10 of the box 1, 101. In such embodiments, the user identifier will relate to a previously registered user of the delivery service. Thus, a request will be deemed valid if both the user identifier and the identifier of the user device 29 of the delivery person are both registered with the delivery service.

The remote server 27 stores in its memory 35 details of the status of each box 1, 101 in the locker station. Thus, on receipt of a valid request for an access code, the remote server 27 will provide an access code for an empty box 1, 101. The delivery person can then access the box 1, 101 via any of the methods previously described and subsequently deposit the delivery.

The remote server 27 then sends a delivery message, via any of the messaging means previously disclosed, to the user device 29 corresponding to the user identifier contained within the access request. The delivery message sent contains information regarding the delivery, such as the location of the locker station and/or the time of delivery, and also a further identifier. The further identifier contains information suitable to identify the package delivered, and information corresponding to this further identifier is also stored in the memory 35 of the remote server 27.

To collect the package the user will, on arrival at the locker station, send an access request to the remote server 27 using their user device 29. The access request will comprise the further identifier and the identifier of the user device 29. The remote server 27 then validates this request using the validation methods previously described and, if the request is valid provides an access code. The access code is determined on the basis of the time and the identity of the box 1, 101 that contains the package. The identity of the box 1, 101 that contains the package is in turn determined by examination of the memory 35 of the remoter server 27 by the remote server 27 to see which box identifier 10 relates to the package in question.

In all of the above described embodiments, the methods of generating access codes for opening the locks 5 in both the server 27 and the lock 5 can further include a step by which it is ensured that an immediately subsequent access code is different from a previously generated access code. This step can take the form of a simple comparison such as a subtraction of the proposed subsequent access code from the previous access code. So long as the result of the subtraction is not zero, then the proposed subsequent access code is considered acceptable. If the result of the subtraction is zero, then an alternative access code must be generated in place of the proposed access code. The alternative access code can be generated by adding a predetermined value to the proposed access code. Thus, for example 1 (or some other integer) can be added to the proposed access code to yield the alternative access code. Alternatively, a replacement code can be calculated by temporarily changing the seed code of code generation algorithm.

Both the processor in the processor 37 in the server 27 and the processor 25 in the lock 5 must be configured to change the access code in the same predetermined manner.

In all of the above described embodiments in which a plurality of access codes are valid at a particular time, it is necessary that each of the currently valid access codes are different so that a correct unlocking behaviour, or synchronisation correction, can be ensured. In a manner similar to that described above, each of the currently valid codes can be tested against one another to ensure that they are different. Thus, the methods of generating access codes for opening the locks 5 in both the server 27 and the lock 5 can further include a step wherein it is ensured that each proposed access code is different from every currently valid access code for a given validity period. This step can take the form of a simple comparison such as a subtraction of a proposed access code from the currently valid access codes. So long as the result of each subtraction is not zero, then the proposed access code is considered acceptable.

If the result of any subtraction is zero, then an alternative access code must be generated in place of that proposed access code. A further check must then be made to ensure that the replacement proposed access code is also not the same as any currently valid access code.

In a similar manner to that described above, the alternative access code can be generated by adding a predetermined value to the proposed access code. Alternatively, a replacement code can be calculated by temporarily changing the seed code of code generation algorithm. Thus, for example 1 can be added to the proposed access code to yield the alternative access code. Both the processor in the processor 37 in the server 27 and the processor 25 in the lock 5 must be configured to change the proposed access code in the same manner.

In further embodiments, proposed access codes can also be replaced even if they are only merely similar to a previous access code or a currently valid access code. Thus, for example, if a proposed access code differs by only one digit from an immediately previous access code or a currently valid access code, then it can be replaced by any of the methods described above.

In all of the above described embodiments, the processor 25 can be configured to record the fact that a particular access code has been input to the box 1, 101 and that access to the box 1, 101 has been gained as a result. In such embodiments, the processor 25 is configured to render a used access code no longer valid, even if the valid period for the access code has not expired. Thus, in such embodiments, multiple opening of the box 1 using a single code is prevented. This can be used, for example, to prevent removal of a package after delivery by inputting the same access code.

It is to be understood that combinations of the above described embodiments are also envisaged. Thus, where practical, any combination of the described embodiments is to be considered to be included as part of the disclosure of this application.

As mentioned above, embodiments can be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. A storage container for storing postal items, the container comprising:
a container with a door,
a locking means for locking the door shut,
code input means for inputting a code to unlock the locking means,
weighing means for measuring the weight of contents of the container, and
communication means for communicating the measured weight of the contents when the door is locked shut, wherein a code for unlocking the locking means varies over time.

2. A storage container according to claim 1, wherein the communication means comprises wireless means to communicate with a user device.

3. A storage container according to claim 1 or 2 further comprising
a code generation means for generating a plurality of access codes in a first series, each access code being valid for a predetermined period of time, and
a code comparison means, wherein
the code comparison means is configured to unlock the lock in response to input of a code that corresponds to a currently valid access code.

4. A storage container according to claim 3, wherein
the code generation means is configured to generate a plurality of access codes in a first series and a second series, each access code being valid for a predetermined period of time, and wherein
the period of validity of each access code in first series partially overlaps the period of validity two adjacent access codes in the second series.

5. A storage container according to any preceding claim wherein the container is configured to determine the weight of the contents of the container by determining a difference between weight measurements taken upon receipt of an access code, but before the door is opened, and subsequently after the door is locked shut.

6. A method for processing a request for collection of a package from a storage container, the container comprising an internal means for weighing a package, means to communicate with a user device and being unlockable using a time-varying access code, the method comprising:
receiving a request for collection of a package,
providing a currently valid access code for accessing the storage container,
receiving information regarding the weight of the contents of the container, and
generating collection information on the basis of the weight of the contents,
wherein the information regarding the weight of the contents of the container is communicated to a user device via the means to communicate with a user device when the container is locked shut.

7. A method according to claim 6, wherein the information regarding the weight of the contents of the container is derived by comparing a measurement of the weight of the contents of the container upon input of the access code but before a door to the container is opened, with a measurement taken after the door is locked shut.

8. A method according to claim 6 or 7, further comprising providing package identification means in the form of a code for identifying the package to be collected.

9. A method according to claim 8 wherein the package identification means is provided to a user of the storage container prior to receipt of the request for collection of the package and associated with the package upon receipt of the request for collection of the package.

10. A method according to any of claims 6-8, wherein the collection information includes pricing information regarding a plurality of pricing options for collection of the package.

11. A method for providing an access code for delivery of a package to a storage container, the container comprising an internal means for weighing a package, means to communicate with a user device and being unlockable using a time-varying access code, the method comprising:
receiving a request for an access code for delivery of a package,
providing a currently valid access code for accessing the storage container,
receiving information regarding the weight of the contents of the container, and
generating delivery information on the basis of the weight of the contents,
wherein the information regarding the weight of the contents of the container is communicated to a user device via the means to communicate with a user device when the container is locked shut.

12. A method according to claim 11, wherein the information regarding the weight of the contents of the container is derived by comparing a measurement of the weight of the contents of the container upon input of the access code but before a door to the container is opened, with a measurement taken after the door is locked shut.

13. A method according to claim 11 or 12, further comprising providing a delivery confirmation message or error message on the basis of the information regarding the weight of the contents of the container.

14. A computer program product comprising computer readable instructions which, when implemented on a processor perform all of the steps of the method of any of claims 6 to 13.

15. A computer readable medium comprising the computer program of claim 14.
